# EUROPÄISCHE PATENTSCHRIFT

(11) **EP 2 516 212 B1**
(45) Veröffentlichungstag und Bekanntmachung des Hinweises auf die Patenterteilung: **04.09.2013**
(21) Anmeldenummer: 10788007.2
(22) Anmeldetag: 19.11.2010
(51) Int. Cl.: B60R 11/04, G03B 17/08

(54) **KAMERAEINRICHTUNG ZUR BILDERFASSUNG EINES AUSSENBEREICHS AN EINEM FAHRZEUG**
CAMERA DEVICE FOR IMAGE PICKUP OF AN OUTSIDE AREA OF A VEHICLE
DISPOSITIF DE CAMÉRA POUR CAPTURE D'IMAGE DE L'ÉXTÉRIEUR D'UN VÉHICULE

(30) Priorität: 22.12.2009 DE 102009060425
(43) Veröffentlichungstag der Anmeldung: 31.10.2012
(60) Teilanmeldung: 12007124.6
(73) Patentinhaber: Huf Hülsbeck & Fürst GmbH & Co. KG, 42551 Velbert (DE)
(72) Erfinder: ULOMEK, Peter, 42477 Radevormwald (DE); BUSCHMANN, Gerd, 42553 Velbert (DE); SCHÜTZ, Heiko, 42549 Velbert (DE)
(86) Internationale Anmeldenummer: PCT/EP2010/007068
(87) Internationale Veröffentlichungsnummer: WO 2011/085745

(56) Entgegenhaltungen:
- EP-A1- 1 529 688
- DE-A1- 3 900 667

## Beschreibung

Die Erfindung betrifft eine Vorrichtung gemäß dem Oberbegriff des Anspruchs 1. Eine solche Kameraeinrichtung wird zur Bilderfassung eines Außenbereichs an einem Fahrzeug verwendet, insbesondere zur Bilderfassung des Bereichs hinter dem Fahrzeug, vorzugsweise beim Rückwärtsfahren. Solche Kameraeinrichtungen sind bereits bekannt. Die Kamera verfügt über eine Einfahrlage, in welcher sie zumindest bereichsweise in einem Raum, dem Kameraraum, angeordnet ist, welcher gegenüber dem Außenbereich mit einer Klappe oder Ähnlichem verschlossen ist und über eine Ausfahrlage, in welcher sie Bilder des Außenbereichs erfassen kann. Dies hat den Vorteil, dass die Kamera während des üblichen Fahrbetriebs des Fahrzeugs nicht verschmutzt wird.

Die EP 1 529 688 A1, die den Oberbegriff des Anspruchs 1 bildet, beschreibt eine Kameraanordnung für Kraftfahrzeuge. Diese Kamera ist zwischen einer Einfahrlage und einer Ausfahrlage beweglich. Die Kamera ist in einem Gehäuse angeordnet, welches über einen Führungsschlitz verfügt, durch welchen die elektrischen Leitungen der Kamera geführt werden. Alternativ kann auch auf den Führungsschlitz verzichtet werden und das Gehäuse geschlossen ausgebildet sein. In diesem Fall ist die Leitung der Kamera unbeweglich durch die Schutzwandlung geführt und im Inneren des Gehäuses entsprechend lang und flexibel ausgebildet. Nachteilig an dieser Anordnung ist es jedoch, dass gerade beim Rückwärtsfahren aus dem Auspuff austretende Abgase über das Kameragehäuse in den Innenraum des Fahrzeugs eindringen können. Dies ist insbesondere dann problematisch, wenn in dem Bereich hinter der Heckklappe Personen befindlich sind oder Tiere, wie beispielsweise Hunde, sich im Kofferraum aufhalten. Die Abgase sind giftig und könnten dann von den entsprechenden Personen oder Tieren eingeamtet werden, was zu gesundheitlichen Schäden führen kann. Wird die Kamera in dem Gehäuse gekapselt, muss eine entsprechend lange Kameraleitung in dem Gehäuse vorgesehen sein, damit die Kamera die notwendige Bewegung durchführen kann. Dies erhöht jedoch die Bauhöhe des Gehäuses, was ebenfalls problematisch ist, da in diesem Bereich normalerweise wenig Bauraum verfügbar ist.

Die DE 39 00 667 A zeigt eine Kameraeinrichtung mit einem Dichtelement. Dieses ist zum Fahrzeuginneren hin mit einem Faltenbalg versehen, welcher sich beim Einfahren der Halterung der Kamera ausdehnt.

Aufgabe der Erfindung ist es daher eine Kameraeinrichtung für Fahrzeuge zu schaffen, welche einerseits verhindert, dass Gase, insbesondere Abgas, aber auch Flüssigkeiten in den Innenraum des Fahrzeugs eindringen können und welches anderseits eine kompakte Bauweise ermöglicht. Diese Aufgabe wird durch die kennzeichnenden Merkmale des Anspruchs 1 gelöst, denen folgende besondere Bedeutung zukommt.

Gemäß der in Anspruch 1 beschriebenen ersten Ausführungsform der Erfindung ist zumindest ein Gehäusebauteil als Dichtelement vorgesehen, welches aus einem fluiddichten Material besteht und den Kameraraum gegenüber dem Innenraum fluiddicht abschließt. Dieses Dichtelement besteht aus einem flexiblen, elastischen Material, wobei die elektrischen Leitungen der Kamera bzw. des Antriebs selbst fluiddicht durch das Dichtelement geführt werden und dort festgelegt sind. Führt die Kamera nun ihre Verfahrbewegung durch, bewegen sich auch die elektrischen Leitungen der Kamera. Da das Dichtelement jedoch aus einem flexiblen elastischen Material besteht, nimmt es diese Bewegungen bzw. die Bewegungen der Kamera auf und bewegt sich mit. Da das Dichtelement aus einem fluiddichten Material besteht und auch fluiddicht montiert ist, kann so auf einfache Art und Weise der Außenbereich mit den eventuell vorhandenen Abgasen oder sonstigen unerwünschten Fluiden vom Innenraum des Fahrzeugs abgeschlossen werden. Auch ist es nicht notwendig ein längeres Kabel in dem Kameraraum vorzusehen, da sich das flexible Dichtelement mit den Leitungen, welche an die Kamera angeschlossen sind bzw. der Kamera selbst, mitbewegt. Es ist somit möglich eine fluiddichte Kameraeinrichtung zu schaffen, welche klein und kompakt ausführbar ist. 3

In einer Ausführungsform der Erfindung, gemäß Patentanspruch 1, ist die Kamera größtenteils auf der die im Innenraum zugewandte Seite des Dichtelementes angeordnet und durchdringt nur mit ihrem Linsenreich eine Ausnehmung in dem Dichtelement. Diese Ausnehmung ist mit dem Linsenbereich bzw. einem angrenzenden Bereich fluiddicht abgedichtet. Die Kamera befindet sich somit überwiegend in Richtung des Innenraums und ist nicht nur vor Gas, sondern auch vor Flüssigkeit und Verschmutzungen geschützt. Das aus flexiblem elastischem Material bestehende Dichtelement bewegt sich dann mit der Kamera mit und führt sämtliche Bewegungen der Kamera mit durch.

Bei der erfindungsgemäßen Kameraeinrichtung ist bevorzugter weise ein Antrieb vorgesehen, welcher die Kamera in ihrer Verfahrbewegung bewegt. Er kann somit dafür sorgen, dass die Kamera von der Einfahr- in die Ausfahrlage und/oder von der Ausfahr- in die Einfahrlage bewegt wird. Der Antrieb kann sich dabei entweder auf der gleichen Seite des Dichtelementes bzw. des Gehäusebauteils wie die Kamera befinden oder auch auf gegenüberliegenden Seite. Ist der Antrieb auf der gleichen Seite vorgesehen wie Kamera und befinden sich beide im Kameraraum, so kann der Antrieb über eine durch das Dichtelement bzw. den Gehäusebauteil fluiddicht hindurchgeführte Leitung versorgt werden. Hierbei sind nahezu alle Möglichkeiten denkbar. Der Antrieb kann sich jedoch auch auf der gegenüberliegenden Seite des Dichtelements bzw. des Gehäusebauteils wie die Kamera befinden. Hier könnte beispielsweise die Kamera im Kameraraum selbst angebracht sein, während sich das Dichtelement im Innenraum befindet. In diesem Fall wird dann ein Antriebselement wie beispielsweise eine Welle oder Ähnliches fluiddicht durch das Dichtelement und/oder den Gehäusebauteil geführt. Ob der Antrieb sich auf der gleichen Seite wie die Kamera oder auf der gegenüberliegenden Seite befindet hängt vom jeweiligen Anwendungsfall ab.

Im Kameraraum kann zusätzlich ein Ablauf wie eine Rinne, ein Schlauch oder Ähnliches vorgesehen sein, durch welchen im Kameraraum befindliche Feuchtigkeit in den Außenbereich führbar ist. Befindet sich die Kamera in ihrer Ausfahrlage, so ist es möglich, dass Feuchtigkeit wie beispielsweise Niederschlag, Spritzwasser oder Ähnliches in den Kameraraum gelangen. Wenn die Kamera dann wieder in ihre Einfahrlage gebracht wird, kann es sein, dass sich die Feuchtigkeit im Linsenbereich der Kamera niederschlägt, was die Qualität der Bilderfassung mindert. Um dies zu vermeiden kann am Kameraraum eine Ablaufrinne vorgesehen sein. Über diese kann dann eventuelle im Kameraraum befindliche Feuchtigkeit in den Außenbereich geführt werden. Selbstverständlich ist es auch möglich, einen Schlauch, ein Rohr oder Ähnliches vorzusehen, welcher eine Verbindung zwischen Kameraraum und Außenbereich herstellt und so einen Ablauf für eventuelle im Kameraraum befindliche Feuchtigkeit schafft.

Eine Alternative um zu verhindern, dass sich Feuchtigkeit im Kameraraum ansammelt, besteht darin, einen Bereich des Gehäusebauteils und/oder des Dichtelements so zu gestalten, dass er zwar den Kameraraum fluiddicht zum Innenraum hin abdichtet, um zu verhindern, dass beispielsweise Abgase in den Innenraum hinein gelangen können, der aber vom Innenraum aus für einige Fluide zum Kameraraum hin durchlässig ist. Als Fluid bietet sich hier beispielsweise Luft an oder auch einzelne Bestandteile von Luft. Dies kann insbesondere durch eine semipermeable Membran geschehen. Ist die Öffnung vom Außenbereich zum Kameraraum hin nicht vollständig gasdicht abgeschlossen, so bildet sich durch die Luftströmung während der Fahrt im Kameraraum ein Unterdruck. Hierdurch wird durch den Bereich Luft bzw. ein anderes Fluid in den Kameraraum gesaugt. Durch den am Heck des Fahrzeugs während er Fahrt entstehenden Unterdruck wird jedoch permanent Luft aus dem Kameraraum abgesaugt, wodurch wieder Fluid vom Innenraum durch den Bereich in den Kameraraum einströmt. Hierdurch wird im Kameraraum befindliche Feuchtigkeit ebenfalls abgesaugt und der Kameraraum wird so getrocknet.

Weitere Vorteile und Ausführungsformen der Erfindung ergeben sich aus den Unteransprüchen, der nachfolgenden Beschreibung, sowie den Zeichnungen. In den Zeichnungen ist die Erfindung in drei Ausführungsformen dargestellt. Es zeigen
- Fig. 1:: Eine Ausführungsform gemäß Anspruch 1 in Einfahrlage im Schnitt.
- Fig. 2:: Die Ausführungsform aus Figur 1 in Ausfahrlage.
- Fig. 3:: Die Erfindung gemäß Figur 1 und 2 an einem Griff montiert mit Antrieb.
- Fig. 4:: Ein erfindungsgemäßes Dichtelement gemäß Figur 1 bis 3.
- Fig. 5:: Eine weitere Ausführungsform der Erfindung gemäß Anspruch 1.
- Fig. 6:: Eine nicht erfindungsgemäβe Ausführungsform

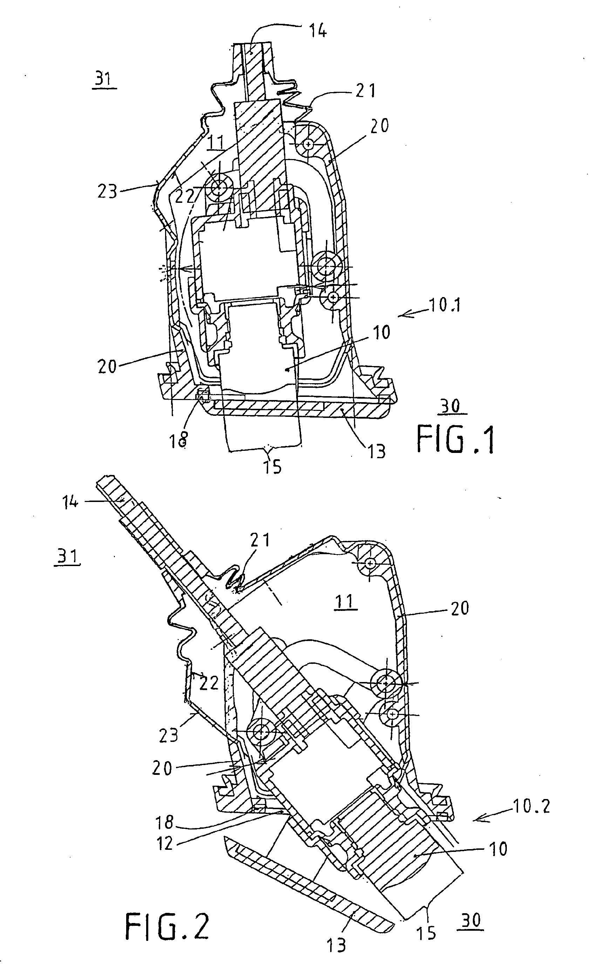

Figuren 1 und 2 zeigen eine erfindungsgemäße Ausführungsform der Kameraeinrichtung gemäß Anspruch 1. In Figur 1 ist die Kameraeinrichtung in Einfahrlage 10.1 der Kamera 10 gezeigt. Die Klappe 13 schließt die Öffnung 12. Im Bereich der Öffnung 12 ist ein Dichtorgan 18 vorgesehen, welches den Kameraraum 11 in der Einfahrlage 10.1 der Kamera 10 gegenüber dem Außenbereich 30 abdichtet. So wird verhindert, dass in der Einfahrlage 10.1 der Kamera 10 Schmutz und/oder Feuchtigkeit in den Kameraraum 11 eindringen können.

Neben dem Gehäusebauteil 20 ist ein Dichtelement 21 vorgesehen. Dieses ist hier in Form eines Balgs, nämlich eines Faltenbalgs, ausgeführt. Auch andere Balgformen sind selbstverständlich denkbar. Der Balg besteht aus einem elastischen flexiblen Material, wie beispielsweise vulkanisiertes Gummi oder auch ein spritzgegossenes Material. Selbstverständlich sind auch andere Materialen denkbar. Es ist auch möglich das Dichtelement 21 mit oder ohne den Gehäusebauteil als Zwei-Komponenten-Bauteil auszuführen. So kann das Dichtelement starre Bereiche aufweisen und dazu auch einen flexiblen elastischen Bereich, welcher für die erforderliche Beweglichkeit des Dichtelements sorgt.

Die elektrischen Leitungen 14 der Kamera 10 sind an dem Dichtelement 21 fluiddicht befestigt. Wird jetzt die Kamera 10 von ihrer in Figur 1 gezeigt Einfahrlage 10.1 in ihre in Figur 2 gezeigt Ausfahrlage 10.2 bewegt, so bewegen sich die elektrischen Leitungen 14 der Kamera 10 mit und damit auch das Dichtelement 21. Durch die Flexibilität des Dichtelements 21 ist es möglich, die gesamte Kameraeinrichtung sehr kompakt und klein auszuführen.

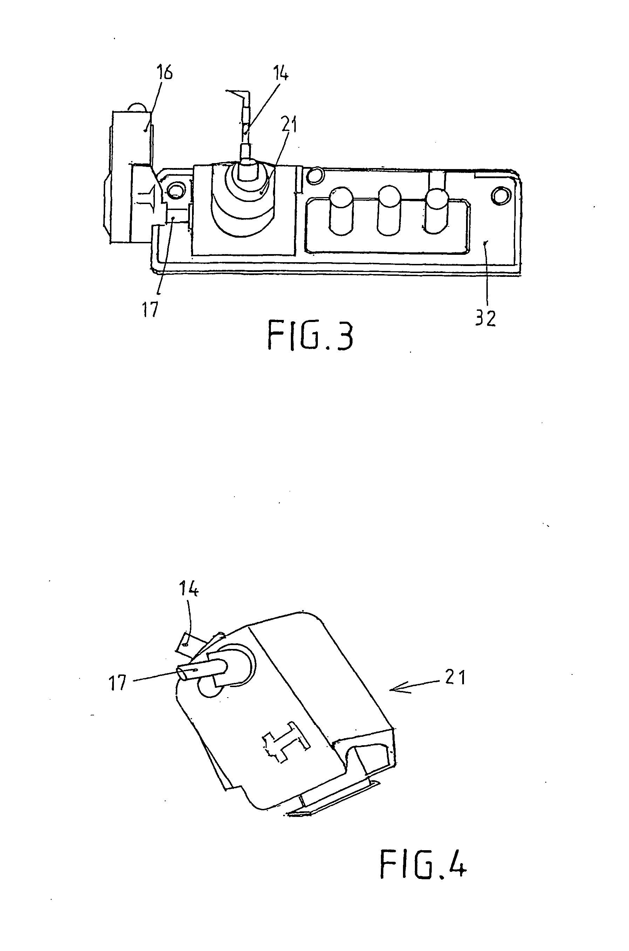

Figur 3 zeigt nun ein konkretes Anwendungsbeispiel der Ausführungsform der Erfindung gemäß den Figuren 1 und 2. Der Gehäusebauteil 20 sowie das Dichtelement 21 sind an einem Griff 32, hier einem Griff 32 einer Heckklappe eines Fahrzeugs, befestigt. Aus dem Dichtelement 21 ragen die elektrischen Leitungen 14 der Kamera 10 heraus. Diese ist hier nicht näher erkennbar. Es ist selbstverständlich auch denkbar, dass die Kameraeinrichtung an einer anderen Stelle montiert wird, anstatt an einem Griff 32. Hier bieten sich beispielsweise die Heckklappe, eine Beleuchtungseinrichtung, das Nummernschild, eine Stoßstange bzw. ein Stoßfänger und/oder ein Karosseriebauteil an. Auch andere Stellen am Kraftfahrzeug sind denkbar, wobei bei der Auswahl der passenden Stelle es insbesondere darauf ankommt, dass die Kamera 10 in Ihrer Ausfahrlage 10.2 den gewünschten Außenbereich des Fahrzeuges erfassen kann.

Des Weiteren ist ein Antrieb 16 vorgesehen, welcher sich jedoch außerhalb des Dichtelements 21 und der Gehäusebauteile 20 befindet. Lediglich ein Antriebselement 17, hier eine Welle, ragt in das Dichtelement 21 hinein, um dort die Kamera 10 von ihrer Einfahrlage 10.1 in ihre Ausfahrlage 10.2 und wieder zurück verfahrbar zu machen. Die Stelle wo das Antriebselement 17 in das Dichtelement 21 hineinragt ist ebenfalls fluiddicht abgedichtet.

Figur 4 zeigt nunmehr ein Dichtelement 21. Dieses kann über einen oder mehrere Gehäusebauteile 20 gestülpt werden und besteht vollständig aus einem elastischen Material. Der Bereich an dem die elektrischen Leitungen 14 der Kamera 10 aus dem Dichtelement 21 herausragen ist auch hier wieder nach Art eines Balgs, nämlich eines Faltenbalgs gestaltet. Seitlich erkennt man noch den Ansatz des Antriebselements 17 an welchen der Antrieb 16 angeschlossen werden kann um die Kamera 10 zwischen ihrer Einfahrlage 10.1 und ihrer Ausfahrlage 10.2 verfahrbar zu gestalten. Der Antrieb 16 ist hier auf der einen Seite 22 des Dichtelements 21, welche dem Innenraum 31 zugewandt ist, angeordnet, während sich die Kamera 10 auf der anderen Seite 23 des Dichtelements 21, welche dem Kameraraum 11 zugewandt ist, befindet. Selbstverständlich ist es auch möglich, den Antrieb 16 auf der gleichen Seite 22, 23 des Dichtelements 21 vorzusehen wie die Kamera 10.

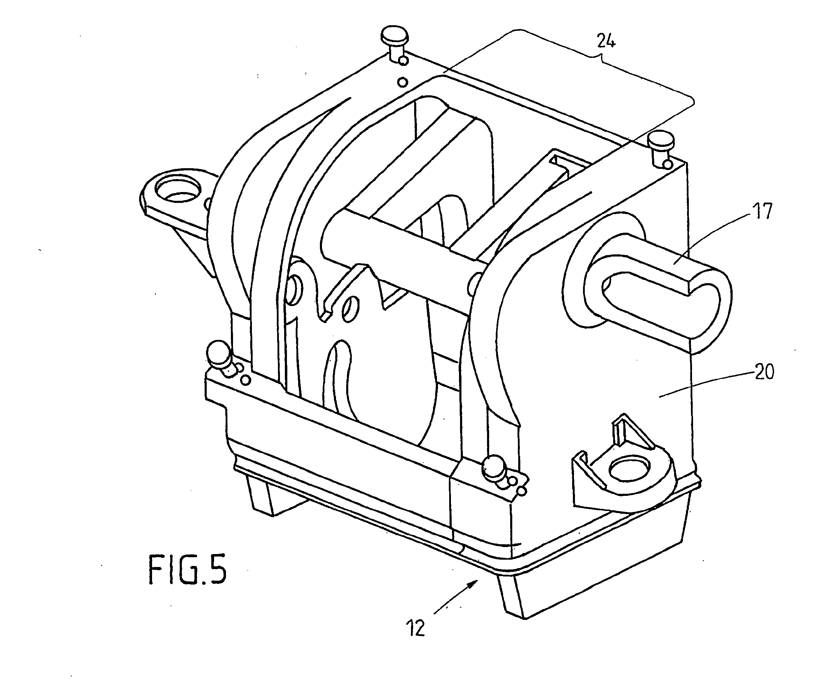

Figur 5 zeigt ein weiteres Ausführungsbeispiel der Erfindung gemäß Patentanspruch 1. Hier sind Gehäusebauteile 20 vorgesehen in welche die Kamera 10 aufnehmbar ist. Der Antrieb 16 ist wiederum außerhalb des Gehäusebauteils 20 angeordnet, wobei ein Antriebselement 17 den Gehäusebauteil 20 durchdringt und die Kamera 10 zwischen ihrer Einfahrlage 10.1 und ihrer Ausfahrlage 10.2 verfahrbar macht. Der Gehäusebauteil 20 weist einen Durchbruch 24 auf, welcher von einem hier nicht näher gezeigten Dichtelement 21 verschließbar ist. Hierbei ist das Dichtelement 21 fluiddicht an dem Gehäusebauteil 20 befestigbar. Auch dieses Dichtelement 21 kann wiederum im Bereich der elektrischen Leitung 14 der Kamera 10 als Balg ausgebildet sein.

Insgesamt ist festzustellen, dass das Dichtelement 21 sich auf der der Kamera 10 abgewandten Seite des Gehäusebauteils 20 oder auch auf der der Kamera 10 zugewandten Seite des Gehäusebauteils 20 befinden kann. Es kann den oder die Gehäusebauteile 20 dabei vollständig umschließen bzw. von innen auskleiden. Es ist aber auch möglich das Dichtelement 21 so vorzusehen, dass es nur Durchbrüche 24 bzw. Lücken der Gehäusebauteile 20 überdeckt. Durch die Verwendung des zumindest bereichsweise flexiblen Dichtelements 21 kann so eine fluiddichte Abdichtung zwischen dem Kameraraum 11 und dem Innenraum 31 erfolgen.

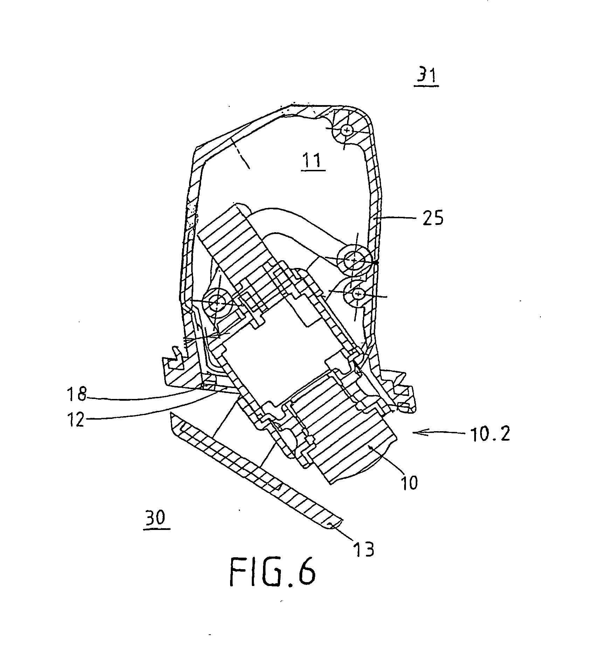

Ein nicht erfindungsgemäβes Ausführungsbeispiel zeigt die Figur 6. Die hier dargestellte Kamera 10 verfügt nicht über elektrische Leitungen 14. Vielmehr wird sie auf induktivem Wege mit Strom versorgt. Die von der Kamera 10 erfassten Bilder können dann mittels elektromagnetischer Wellen an eine im Fahrzeug befindliche Elektronik, ein Steuergerät oder Ähnliches übertragen werden. Hierfür eignen sich die unterschiedlichsten Möglichkeiten der Übermittlung von Daten über elektromagnetische Wellen so beispielsweise Funk, Bluetooth oder Ähnliches.

Dadurch, dass es nicht notwendig ist, die elektrischen Leitungen 14 der Kamera 10 durch ein Dichtelement 21 zu führen, können die Gehäusebauteile 20 als Gehäuse 25 ausgebildet werden. Dieses Gehäuse 25 kann auch vollständig aus starrem Material sein. Im Inneren des Gehäuses 25 befindet sich dann der Kameraraum 11. Hierdurch ist es wiederum möglich, eine kompakte Baugruppe auszubilden, welche wenig Platz beansprucht. Auch kann man die Gehäusebauteile 20 bzw. das Gehäuse 25 auf einfache Art fluiddicht gestalten. Der Antrieb 16 kann dann entweder innerhalb des Kameraraumes 11 oder außerhalb des Kameraraumes 11 vorgesehen sein. Im letzteren Fall durchdringt wiederum ein Antriebselement 17 einen Gehäusebauteil 20 bzw. das Gehäuse 25. Befindet sich der Antrieb 16 innerhalb des Kameraraumes 11, so erfolgt sie Stromübertragung zum Antrieb 16 ebenfalls auf induktivem Wege. Wird der Antrieb 16 außerhalb der Gehäusebauteile 20 bzw. des Gehäuses 25 vorgesehen, so kann die Stromübertragung auf herkömmliche Art und Weise erfolgen.

### Bezugszeichenliste

- 10: Kamera
- 10.1: Einfahrlage
- 10.2: Ausfahrlage
- 11: Kameraraum
- 12: Öffnung
- 13: Klappe
- 14: Elektrische Leitungen von 10
- 15: Linsenbereich
- 16: Antrieb
- 17: Antriebselement
- 18: Dichtorgan
- 20: Gehäusebauteil
- 21: Dichtelement
- 22: Eine Seite von 21
- 23: Andere Seite von 21
- 24: Durchbruch von 20
- 25: Gehäuse
- 30: Außenbereich
- 31: Innenraum
- 32: Griff

## Patentansprüche

1. Kameraeinrichtung zur Bilderfassung eines Außenbereichs (30) an einem Fahrzeug,
umfassend eine Kamera (10) und einen Raum (Kameraraum 11), in welchen die Kamera (10) zumindest bereichsweise aufnehmbar ist und welcher zum Außenbereich (30) hin eine Öffnung (12) aufweist,
mit einem Innenraum (31) des Fahrzeugs, welcher insbesondere Bereiche des Kofferraums und/oder des Fahrgastraums umfassen kann,
mit wenigstens einem Gehäusebauteil (20), welcher den Kameraraum (11) vom Innenraum (31) zumindest bereichsweise trennt
wobei die Kamera (10) in eine Einfahrlage (10.1), in welcher sie in dem Kameraraum (11) befindlich und die Öffnung (12) mit einer Klappe (13) od. dgl. abgedeckt ist, und in eine Ausfahrlage (10.2), in welcher die Kamera (10) Bilder des Außenbereichs erfassen kann, mittels eines Antriebs (16) über eine Verfahrbewegung beweglich ist
und wobei die Kamera (10) über elektrische Leitungen (14) verfügt, über welche sie mit Energie versorgt wird und/oder über welche die von der Kamera (10) erfassten Bilder weitergeleitet werden,
**dadurch gekennzeichnet,**
**dass** zumindest ein Gehäusebauteil (20) als Dichtelement (21) vorgesehen ist, welches aus einem fluiddichten Material besteht und welches so angeordnet ist, dass es den Kameraraum (11) gegenüber dem Innenraum (31) fluiddicht abschließt,
**dass** das Dichtelement (21) zumindest bereichsweise aus einem flexiblen elastischen Material besteht, wobei die elektrischen Leitungen (14) der Kamera (10) und/oder des Antriebs (16) fluiddicht durch das Dichtelement (21) führbar und dort festlegbar sind und dass bei der Durchführung der Verfahrbewegung der Kamera (10) die dadurch bedingten Bewegungen der elektrischen Leitungen (14) und/oder die Bewegung der Kamera (10) selbst von dem Dichtelement (21) aufgenommen werden und sich das Dichtelement (21) entsprechend mit bewegt.

2. Kameraeinrichtung nach Anspruch 1, **dadurch gekennzeichnet, dass** das Dichtelement (21) nach Art eines Balgs, insbesondere eines Faltenbalgs, ausgebildet ist.

3. Kameraeinrichtung nach einem der Ansprüche 1 oder 2, **dadurch gekennzeichnet, dass** die Kamera (10) größtenteils auf der dem Innenraum (31) zugewandten einen Seite (22) des Dichtelements (21) angeordnet ist und nur mit ihrem Linsenbereich (15) eine Ausnehmung in dem Dichtelement (21) durchdringt, wobei diese Ausnehmung mit dem Linsenbereich (15) ebenfalls fluiddicht abgedichtet ist.

4. Kameraeinrichtung nach einem der Ansprüche 1 bis 3, **dadurch gekennzeichnet, dass** ein oder mehrere der Gehäusebauteile (20) starr ausgebildet sind und dass das bzw. die Dichtelemente (21) innerhalb, außerhalb oder im Bereich von Durchbrüchen (24) und/oder Lücken der starren Gehäusebauteile (20) anordnenbar sind und so die fluiddichte Abdichtung zwischen dem Kameraraum (11) und dem Innenraum (31) vorsieht, wobei die Kamera (10) insbesondere auf der anderen (23), dem Kameraraum (11) zugewandten Seite des Dichtelements (21) anordnenbar ist.

5. Kameraeinrichtung nach einem der Ansprüche 1 bis 4, **dadurch gekennzeichnet, dass** ein Antrieb (16) vorgesehen ist, welcher die Kamera (10) in ihrer Verfahrbewegung bewegt und welcher sich entweder auf der gleichen Seite (22, 23) des Dichtelements (21) bzw. des Gehäusebauteils (20) wie die Kamera (10) befindet oder auf der gegenüberliegenden Seite (23, 22), wobei dann ein Antriebselement (17), wie etwa eine Welle, fluiddicht durch das Dichtelement (21) und/oder den Gehäusebauteil (20) führbar ist.

6. Kameraeinrichtung nach einem der Ansprüche 1 bis 5, **dadurch gekennzeichnet, dass** die Klappe (13) und/oder die Öffnung (12) über ein Dichtorgan (18) verfügen um den Kameraraum (11) in der Einfahrlage (10.1) der Kamera (10) gegenüber dem Außenbereich (30) abzudichten.

7. Kameraeinrichtung nach einem der Ansprüche 1 bis 6, **dadurch gekennzeichnet, dass** im Kameraraum (11) ein Ablauf wie eine Rinne, ein Schlauch oder ähnliches vorgesehen ist, durch welchen im Kameraraum (11) befindliche Feuchtigkeit in den Außenbereich (30) führbar ist.

8. Kameraeinrichtung nach einem der Ansprüche 1 bis 7, **dadurch gekennzeichnet, dass** ein Gehäusebauteil (20) und/oder das Dichtelement (21) einen Bereich aufweisen, der zwar den Kameraraum (11) fluiddicht zum Innenraum (31) hin abdichtet, der aber vom Innenraum (31) aus durchlässig für einige Fluide, beispielsweise für Luft, ausgebildet ist, wobei dieser Bereich insbesondere eine semipermeable Membran aufweisen kann.

9. Kameraeinrichtung nach einem der Ansprüche 1 bis 8, **dadurch gekennzeichnet, dass** die Einrichtung an einem Griff (32), einer Heckklappe, einer Beleuchtungseinrichtung, am Nummernschild, an einer Stoßstange bzw. Stoßfänger und/oder an einem Karosseriebauteil angeordnet ist.

## Claims

1. Camera apparatus for capturing images of an external area (30) on a motor vehicle,
comprising a camera (10) and a compartment (camera compartment 11) that is capable of at least partially accommodating the camera (10) and which comprises an opening (12) toward the external area (30),
with an interior space (31) of the vehicle that in particular may include areas of the vehicle boot and/or passenger cabin,
with at least one housing component (20) that separates at least areas of the camera compartment (11) from the interior space (31)
wherein the camera (10) is movable using a drive unit (16) along a travel path into a retracted position (10.1) in which it is situated in the camera compartment (11) and the opening (12) is covered with a flap (13) or similar, and movable into an extended position (10.2) in which the camera (10) is able to capture images of the external area,
and wherein the camera (10) is equipped with electric lines (14) via which it is supplied with energy and/or via which the images captured by the camera (10) can be forwarded,
**characterised in that**
at least one housing component (20) is in the form of a sealing element (21) that is made from a fluid-tight material and is arranged in such manner that it seals the camera compartment (11) off from the interior space (31) in fluid-tight manner,
the sealing element (21) is constructed at least partly from a flexible, elastic material, wherein the electrical lines (14) of the camera (10) and/or of the drive unit (16) can be routed through the sealing element (21) in fluid-tight manner and can be fixed in position there
and that when a travel movement of the camera (10) is carried out, the movements of the electrical lines (14) caused thereby and/or the movement of the camera (10) itself are absorbed by the sealing element (21) and the sealing element (21) is also moved correspondingly.

2. Camera apparatus according to claim 1, **characterised in that** the sealing element (21) is constructed in the manner of a bellows, particularly a flexible bellows.

3. Camera apparatus according to claim 1 or 2, **characterised in that** the camera (10) is arranged mostly on the side (22) of the sealing element (21) facing the interior space (31) and only the lens section (15) thereof passes through a cutaway in the sealing element (21), wherein this cutaway with the lens section (15) is also sealed in fluid-tight manner.

4. Camera apparatus according to any of claims 1 to 3, **characterised in that** one or more of the housing components (20) are of rigid construction, that the one or more sealing elements (21) can be fitted inside, outside or in the area of perforations (24) and/or gaps in the rigid housing components (20), thus providing the fluid-tight seal between the camera compartment (11) and the interior space (31), wherein the camera (10) can particularly be installed on the other side (23) of the sealing element (21), which faces toward the camera compartment (11).

5. Camera apparatus according to any of claims 1 to 4, **characterised in that** a drive unit (16) is provided that moves the camera (10) along a travel path and which is located either on the same side (22, 23) of the sealing element (21) and the housing component (20) as the camera (10) or on the opposite side (23, 22), in which case a drive element (17), such as a shaft, is able to pass through the sealing element (21) and/or the housing component (20) in fluid-tight manner.

6. Camera apparatus according to any of claims 1 to 5, **characterised in that** the flap (13) and/or the opening (12) is/are equipped with a sealing element (18) for sealing the camera compartment (11) off from the external area (30) when the camera (10) is in the retracted position (10.1).

7. Camera apparatus according to any of claims 1 to 6, **characterised in that** an outlet such as a channel, a hose or similar is provided in the camera compartment (11), via which moisture collecting in the camera compartment (11) can be drained to the external area (30).

8. Camera apparatus according to any of claims 1 to 7, **characterised in that** a housing component (20) and/or the sealing element (21) comprise(s) an area that, while sealing the camera compartment (11) off from the interior space (31) in fluid-tight manner, is however constructed to be permeable for some fluids, for example air, originating from the interior space (31), wherein this area may particularly comprise a semipermeable membrane.

9. Camera apparatus according to any of claims 1 to 8, **characterised in that** the apparatus is mounted on a handle (32), a tailgate, a light assembly, on the licence plate, on the bumper, and/or on a bodywork component.

## Revendications

1. Dispositif de caméra à des fins de saisie d'image d'une zone extérieure (30) sur un véhicule automobile,
comprenant une caméra (10) et un espace (espace de caméra 11), dans lequel la caméra (10) peut être renfermée au moins par portions et qui présente une ouverture (12) allant dans la direction de la zone extérieure (30),
comportant un espace intérieur (31) du véhicule, qui peut comprendre notamment des zones du coffre et/ou de la cabine passagers,
comportant au moins un composant de logement (20), qui sépare au moins sur des portions l'espace de caméra (11) de l'espace intérieur (31),
dans lequel la caméra (10) est déplaçable dans une position d'escamotage (10.1), dans laquelle elle se trouve dans l'espace de caméra (11) et recouvre l'ouverture (12) avec un clapet (13) ou similaire, et dans une position de déploiement (10.2), dans laquelle la caméra (10) peut saisir des images de la zone extérieure, au moyen d'un entraînement (16) via un mouvement de déplacement,
et dans lequel la caméra (10) dispose de lignes électriques (14), via lesquelles elle est alimentée en énergie et/ou via lesquelles les images saisies par la caméra (10) sont transmises,
**caractérisé en ce que**
au moins un composant de logement (20) est prévu comme élément d'étanchéité (21), lequel est constitué d'un matériau étanche aux fluides et est disposé de telle sorte qu'il étanchéifie de manière étanche aux fluides l'espace de caméra (11) par rapport à l'espace intérieure (31),
l'élément d'étanchéité (21) est constitué au moins par portions d'un matériau élastique flexible, dans lequel les lignes électriques (14) de la caméra (10) et/ou de l'entraînement (16) peuvent être guidées de manière étanche aux fluides à travers l'élément d'étanchéité (21) et y être étanchéifiées et **en ce que** lors de la mise en oeuvre du mouvement de déplacement de la caméra (10), les mouvements induits des lignes électriques (14) et/ou le mouvement de la caméra (10) elle-même sont absorbés par l'élément d'étanchéité (21) et l'élément d'étanchéité (21) se déplace conjointement de manière correspondante.

2. Dispositif de caméra selon la revendication 1, **caractérisé en ce que** l'élément d'étanchéité (21) est réalisé comme un soufflet, notamment un soufflet en accordéon.

3. Dispositif de caméra selon une des revendications 1 ou 2, **caractérisé en ce que** la caméra (10) est disposée en majeure partie sur un côté (22) de l'élément d'étanchéité (21) tourné vers l'espace intérieur (31) et pénètre seulement par sa zone de lentille (15) un évidement dans l'élément d'étanchéité (21), dans lequel cet évidement est également étanchéifié de manière étanche aux fluides par la zone de lentille (15).

4. Dispositif de caméra selon une des revendications 1 à 3, **caractérisé en ce que** un ou plusieurs des composants de logement (20) ont une configuration rigide et **en ce que** le ou les éléments d'étanchéité (21) peuvent être disposés à l'intérieur, à l'extérieur ou au niveau de percées (24) et/ou d'espaces vides des composants de logement rigides (20) et l'étanchéité aux fluides entre l'espace de caméra (11) et l'espace intérieur (31) est ainsi réalisée, dans lequel la caméra (10) peut être disposée notamment sur l'autre (23) côté de l'élément d'étanchéité (21) tourné vers l'espace de caméra (11).

5. Dispositif de caméra selon une des revendications 1 à 4, **caractérisé en ce que** un entraînement (16) est prévu, lequel déplace la caméra (10) dans son mouvement de déplacement et lequel se trouve sur le même côté (22, 23) soit de l'élément d'étanchéité (21), soit du composant de logement (20) que la caméra (10) ou sur le côté opposé (23, 22), dans lequel ensuite un élément d'entraînement (17) comme un arbre peut être guidé de manière étanche aux fluides à travers l'élément d'étanchéité (21) et/ou le composant de logement (20).

6. Dispositif de caméra selon une des revendications 1 à 5, **caractérisé en ce que** le clapet (13) et/ou l'ouverture (12) disposent d'un organe d'étanchéité (18), afin d'étanchéifier l'espace de caméra (11) dans la position d'escamotage (10.1) de la caméra (10) par rapport à la zone extérieure (30).

7. Dispositif de caméra selon une des revendications 1 à 6, **caractérisé en ce que** dans l'espace de caméra (11) un conduit d'écoulement comme une rigole, un flexible ou similaire est prévu, à travers lequel l'humidité se trouvant dans l'espace de caméra (11) peut être guidé dans la zone extérieure (30).

8. Dispositif de caméra selon une des revendications 1 à 7, **caractérisé en ce que** un composant de logement (20) et/ou l'élément d'étanchéité (21) présentent une zone, qui étanchéifie certes l'espace de caméra (11) de manière étanche aux fluides par rapport à l'espace intérieur (31), mais qui est conçu de manière perméable à quelques fluides, notamment l'air, à partir de l'espace intérieur (31), dans lequel cette zone peut présenter notamment une membrane semi-perméable.

9. Dispositif de caméra selon une des revendications 1 à 8, **caractérisé en ce que** le dispositif est disposé sur une poignée (32), un hayon, un dispositif d'éclairage, sur la plaque minéralogique, sur un pare-chocs et/ou sur un composant de carrosserie.
